# EUROPEAN PATENT SPECIFICATION

(11) **EP 3 168 161 B1**
(45) Date of publication and mention of the grant of the patent: **14.04.2021**
(21) Application number: 16460085.0
(22) Date of filing: 15.11.2016
(51) Int. Cl.: B64F 1/22

(54) **SYSTEM OF DRIVING CHANNELS FOR A CARRIAGE FOR TRANSPORTING AIRPLANES ON AN AIRPORT APRON**
SYSTEM VON KANÄLEN FÜR EIN GEFÄHRT ZUM TRANSPORTIEREN VON FLUGZEUGEN AUF DEM ROLLFELD
SYSTEME DE CANAUX D'UN CARRIAGE POUR TRANSPORTER DES AVIONS SUR L'AIRE DE STATIONNEMENT

(30) Priority: 16.11.2015 PL 41481115
(43) Date of publication of application: 17.05.2017
(73) Proprietor: Malicki, Slawomir, 05-530 Góra Kalwaria (PL)
(72) Inventor: Malicki, Slawomir, 05-530 Góra Kalwaria (PL)
(74) Representative: Budzinski, Slawomir

(56) References cited:
- WO-A1-89/08051
- WO-A2-2011/096833
- WO-A2-2013/070102
- CN-A- 105 151 312
- JP-A- H04 317 852
- US-A- 2 700 937
- US-A- 3 162 404
- US-A- 6 131 854

## Description

The invention concerns a system of driving channels for a carriage for transporting airplanes on an airport apron from a parking location to a take-off location or from a landing location to a parking location or for example servicing location or fueling location. The solution is applicable in the field of aviation.

Till now, airplanes have been transported on an airport apron, from a parking location to a runway or to a parking location after landing, under their own power, with the engines on.

Attempts have been made in order to develop another system for transporting airplanes on the airport apron from a landing/take-off location to a parking location and vice versa.

An assembly for transporting airplane on an airport apron from a parking location to a take-off location and from a landing location to the parking location with an aeroplane's engine off is known from the Polish patent specification No. PL216097B1 (being the priority application for WO 2011/096833). The assembly comprises docking stations made in a surface of access ways (taxiways) to a runway of an airport and connected to guiding grooves located along the route of an airplane movement to a parking location. In the docking stations there are mounted leading mandrels, which are preferably fastened to the front wheel of the airplane after bringing it to the docking station. From the main transport route terminal transport routes are branched off. Guiding grooves which constitute them are covered from the top with pivotable gratings having a segmented structure. The pivotable gratings automatically open in front of the leading mandrel moving in the guiding groove. After passage of the leading mandrel, the pivotable gratings close. In places where the guiding grooves change their direction, in places of their abrupt curves and in junctions of the main transport route to the terminal transport route switching devices are installed.

From the Polish patent specification No. PL218824B1 a carriage assembly is known, intended for a system for transporting airplanes on the airport apron, from a parking location to a runway and from a landing location to a parking location, where a system for transporting airplanes on the airport apron is formed by guiding channels. In the guiding channels leading mandrels are movable, said mandrels being installed in docking stations and hook-mounted to the airplane, and the guiding channels are covered from the top by pivotable plates of a segmented structure. The carriage assembly provides a guiding channel of a rectangular cross-section the bottom of which is provided with lower guiding rails and its sidewalls are provided with side guiding rails and a carriage that constitute a spatial constructions. The carriage construction has a bottom part and side parts. The carriage is provided with a set of lower ground wheels seated in the bottom part of the carriage and a set of side ground wheels seated in both side parts of the carriage.

WO201370102 discloses a carriage assembly for an airplane transporting system on an airport apron. The carriage assembly is formed by a guiding groove with a rectangular cross-section, a floor of which being provided with lower guide rails, and side walls of which being provided with side guide rails, and the carriage is constituted by a spatial structure, having a bottom part and side parts, the carriage being provided with a lower vehicle wheels set, fixed at the bottom part of the carriage, and a side vehicle wheels set fixed at both side parts of the carriage.

The objective of the solution according to the present invention is to develop a system of driving channels for a carriage that transports airplanes on the airport apron, in particular from a landing location to a parking location and from a parking location to a take-off location. The system of channels is intended to provide easy assembling thereof on an existing airport apron in a fast and safe manner, since it may be implemented stepwise, and causes making inoperative only a small area of the airport apron for the time necessary for installing the system, and as a result of the use of this system an airplane will be lighter, more cost-effective in use an will decrease emission of toxins into the environment as well as enhance safety during taxing by means of automatics that controls airplane traffic within the airport.

According to the invention, a carriage assembly is intended for a system for transporting airplanes on the airport apron, from a parking location to a runway and from a landing location to a parking location, where the system for transporting airplanes on the airport apron is formed by guiding channels. In the guiding channels leading mandrels are movable, and the mandrels are installed in docking stations and hook-mounted to the airplane, and the guiding channels are covered from the top by pivotable plates of a segmented structure.

According to the invention, a system of driving channels for a carriage for transporting airplanes on the airport apron, with an actuator or a mandrel with a basket seated thereon and movable in the channels arranged into taxi routes from an airplane landing location to a parking location and from a parking location to a take-off location, is wherein the channels are formed by channel segments, where each channel segment has sidewalls and a top surface perpendicular thereto, and each channel segment is provided with at least one driving unit comprising a motor and a transmission gear that put in motion a carriage that transports the airplane, where the channel segments are depressed in the airport apron so as their top surface is flush with the surface of the airport apron.

Preferably, channel segments comprise straight channel segments.

Preferably, channel segments comprise crossing channel segments.

Preferably, channel segments comprise bifurcating channel segments.

Preferably, channel segments comprise turning channel segments.

Preferably, taxi transporting routes and terminal transporting routes are defined.

According to the invenion, each of the channel segments is provided with at least one driving unit, comprising a motor and a transmission gear, that puts in motion a carriage that transports the airplane, preferably where said motor may be an electric, pneumatic, hydraulic or combustion motor, and said transmission gear may be a friction gear, toothed gear, tension gear, chain gear, belt or band transmission, shaft gear. Preferably, the driving unit comprises magnetic drive.

Also preferably, channel segments along their entire length are provided at their upper surface with pivoting plates of a segmented structure, openable when necessary.

More preferably, in their central part the pivoting plates are provided with a slot in which actuators seated in the transporting carriage are movable, where the actuators carry a basket for of the transporting carriage, in which the front wheel of the airplane being transported is seated.

Also preferably, the channel segments at their entire length are provided at their upper surface with slidable plates of a segmented structure, openable when necessary.

More preferably, the slidable plates, when closed, form a slot in which actuators seated in the transporting carriage are movable, the actuators carry a basket of the transporting carriage, in which the wheel(s) of the airplane being transported is/are seated.

Also preferably, activating and stopping of the individual motors and gears of the driving units in the channel segments that transport airplanes is controlled fully automatically and is monitored by the ground personnel of the airport, preferably in cooperation with the pilot of the airplane.

The object of the invention is presented in an embodiment in the attached drawings where:
Fig. 1 shows the airport apron with driving channels arranged thereon along with airplanes being transported, in a top view;
Fig. 2 shows a carriage in a guiding channel with a basket on which the wheel of the airplane rides;

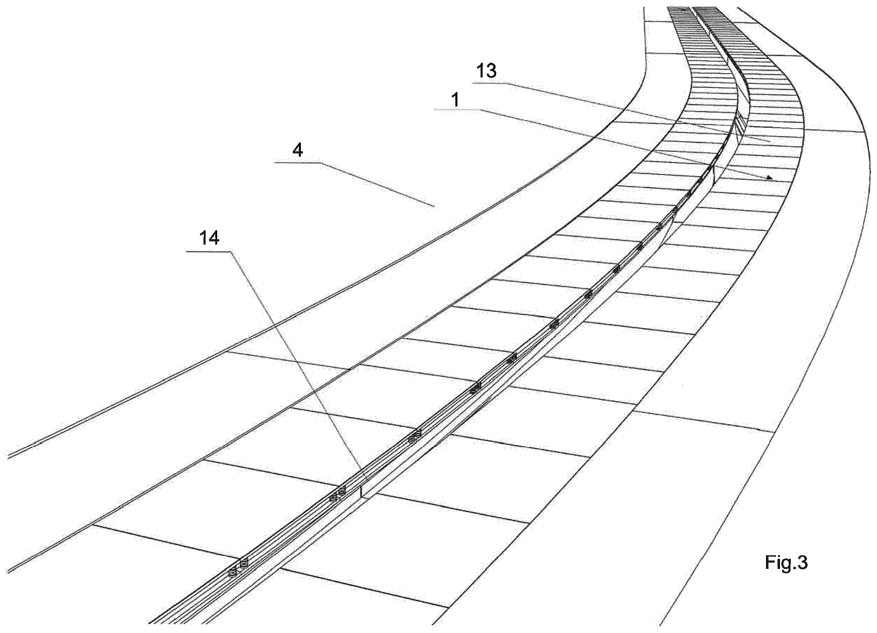

Fig. 3 shows the airport apron with a driving channel covered by pivotable plates;
Fig. 4 shows a turning channel segment;
Fig. 5 shows a crossing channel segment;
Fig. 6 shows a straight channel segment;
Fig. 7 shows a straight channel segment;
Fig. 8 shows a channel segment in cross-section;
Fig. 9 shows an airport apron with open pivotable plates;

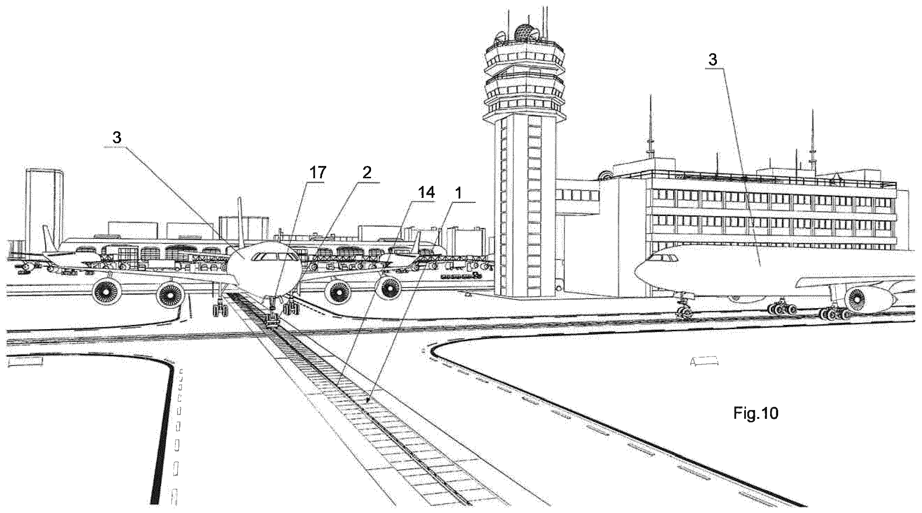

Fig. 10 shows a part of an airport with crossing driving channels; and
Fig. 11 shows a straight channel segment in cross-section.

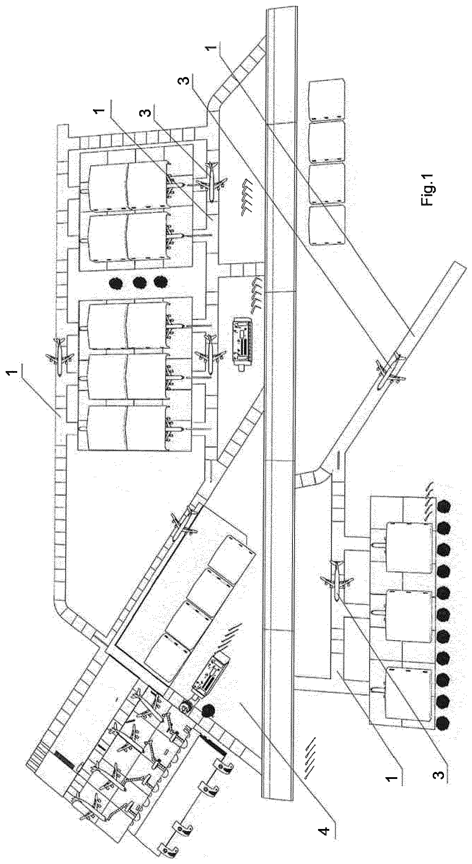

As shown, in the embodiment of the invention illustrated in Fig. 1, an airport intended for taking-off and landing planes 3 has an airport apron 4 where take-off/landing locations as well as parking locations for planes 3 are defined. From such take-off/landing location of a plane 3 to a parking location the airplane 3 has to be transferred on the airport apron 4, and for this purpose driving channels 1 are formed in the airport apron 4, as schematically presented in Fig. 1.

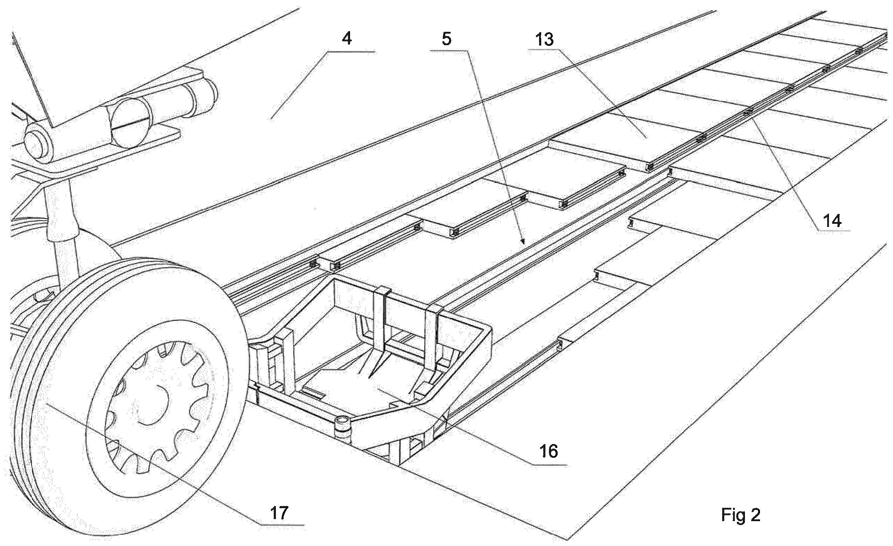

In a driving channel 1 formed in the airport apron 4 a transporting carriage 2 is movable, which has a carriage actuator 15 and a basket 16, seated thereon, in which basket a wheel 17 of an airplane 3 is positioned, as shown in Fig. 2, Fig. 8, and Fig. 11. In this embodiment on the basket 16 of the transporting carriage 2 the front wheel of the airplane 3 is positioned. Of course, the term front wheel 17 of the airplane 3 also includes a front wheel assembly that may comprise more wheels, for example twin wheels.

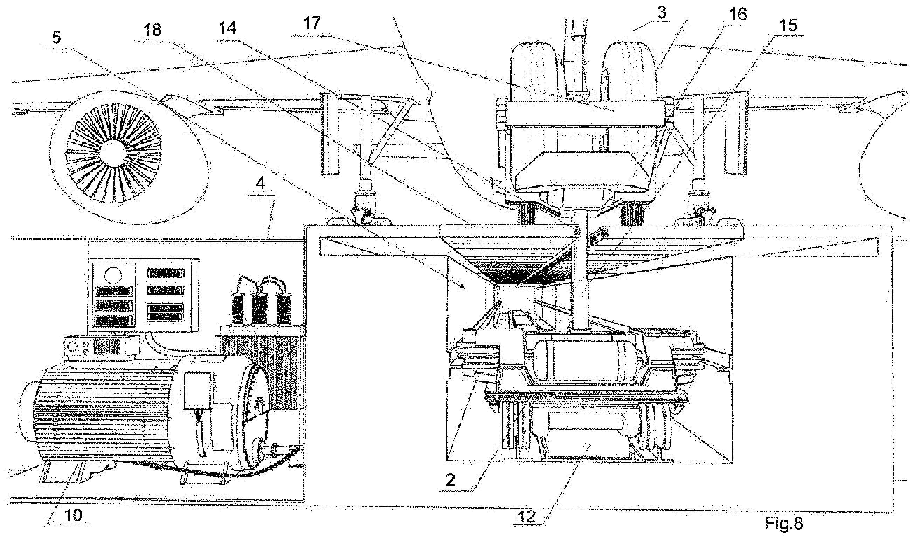

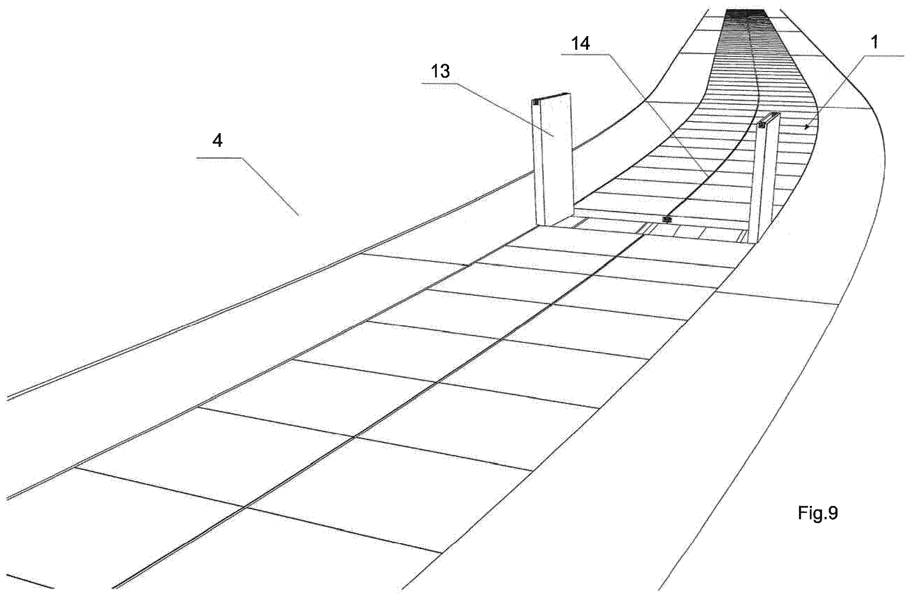

Fig. 2 shows schematically a wheel 17 of an airplane 3 seated on a basket 16 of a transporting carriage 2 located within a driving channel 1, which is not visible during movement of the transporting carriage 2 within the driving channel 1, since the driving channel 1 is covered with a pivotable plate 13. This plate may be pivoted upward, as shown in Fig. 9, or moved slidably aside so as to open the driving channel 1, as shown in Fig. 2 and Fig. 8.

The driving channel 1, within which the transporting carriage 2 is moved for transporting airplanes 3 from a take-off/landing location to a parking location, has to be routed in a way so as to enable movement of the airplane 3 between these locations. Therefore it has to cover a considerable part of the airport apron 4 which involves certain problems during laying the transporting channel 1 on the existing airports and, at a lesser extent, on airports under construction.

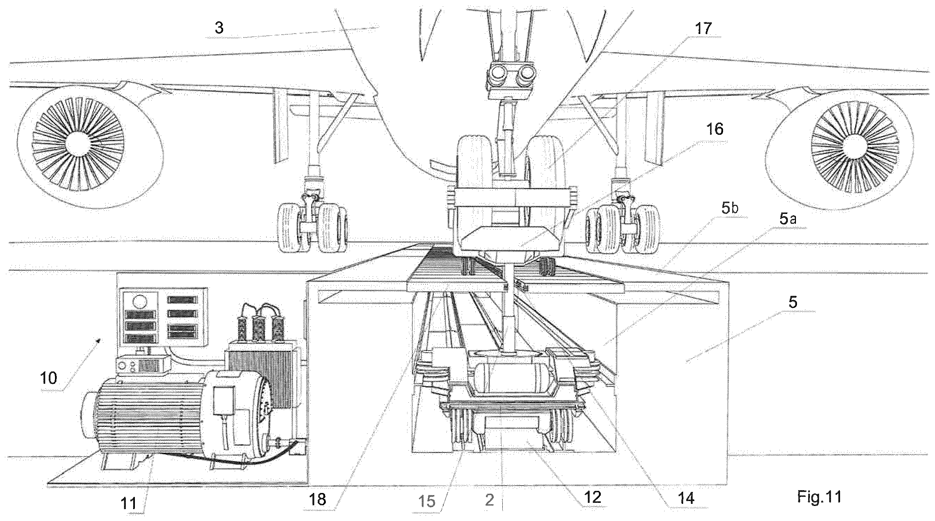

In order to ensure efficient laying of the driving channel 1, as well as enabling stepwise construction thereof, the driving channel 1 is formed of channel segments 5 that in fact constitute subsequent lengths of the driving channel 1 being built. Channel segments 5 are shown in Fig. 2, Fig. 4, Fig. 5, Fig. 6, Fig. 7 as well as in Fig. 8 and Fig. 11.

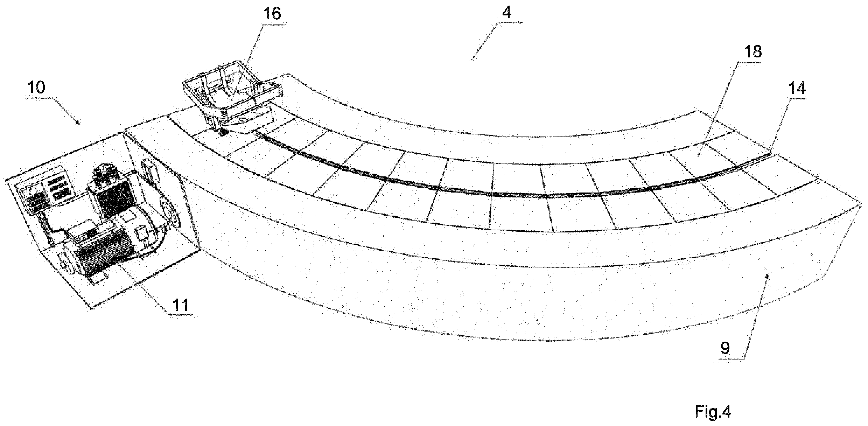

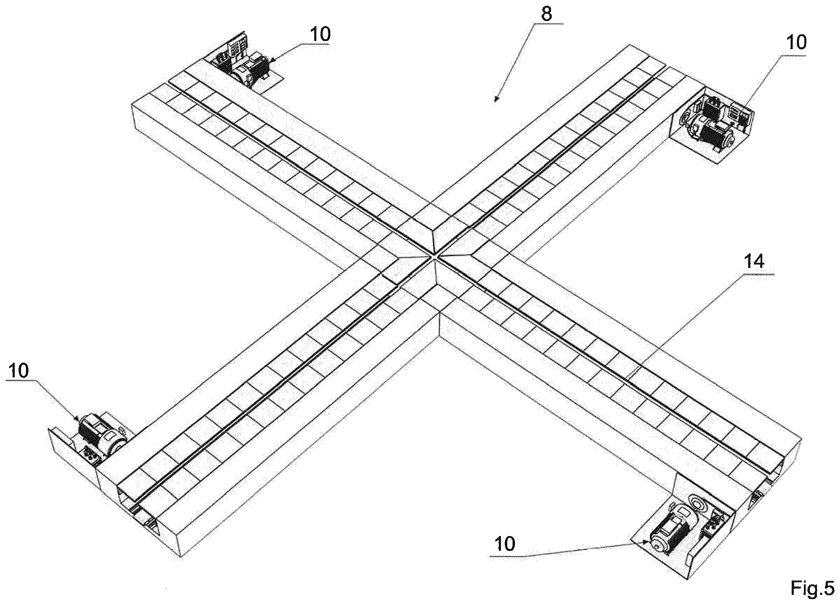

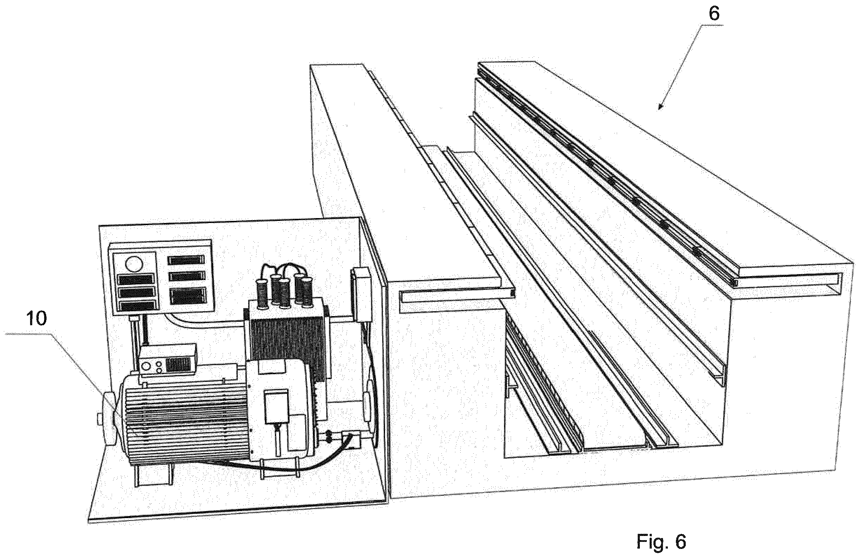

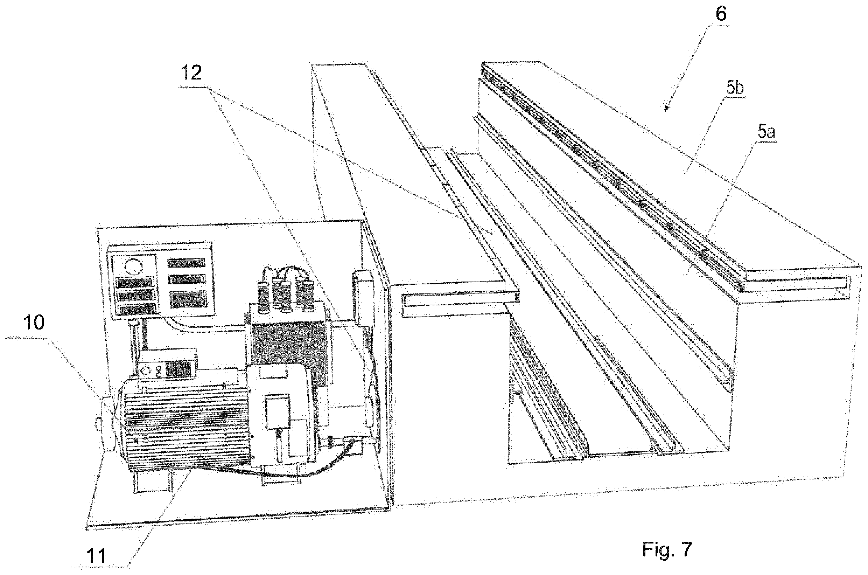

Due to the fact that the driving channel 1 may be routed along a path with turns, bifurcations, and crossings, channel segments 5 have to allow for such instances. This is why the system of driving channels 1 for a carriage 2 that transports airplanes 3 on the airport apron 4 comprises straight segments 6, shown in Fig. 6 and Fig. 7, crossing segments 7, shown in Fig. 5, turning segments 9, shown in Fig. 4, and bifurcating segments.

The driving channel 1 is built on the airport apron 4 by digging out a suitable trench in the ground for each subsequent channel segment 5 which may be, according to the particular need, a straight segment 6, a crossing segment at a point where different lengths of the driving channel 1 are crossed, a bifurcating segment at a point where a possibility to select the further course of the driving channel 1 is intended, and turning segments 9 for which a varied curvature of the turn may be provided.

In the trench dug out in the airport apron 4 a channel segment 5 having sidewalls (51) and a top surface (5b) perpendicular thereto is located in a manner that the top surface (5b) of the channel segment 5 is flush with the surface of the airport apron 4. In this manner a levelled surface is obtained that has a narrow slot 14 only, created between pivotable plates 13 in their closed position. The slot 14 of the channel segment 5 does not obstruct the use of the airport apron 4 with the driving channel 1 when compared to an airport apron 4 without such channel, and the airport may be also used in the same way as used before the driving channel was built. No problems are encountered when moving other vehicles on the airport apron 4.

As shown, in an embodiment of the invention illustrated in Fig. 4, Fig. 5, Fig. 6, Fig. 7, Fig. 8 and Fig. 11, each channel segment 5, either a straight one 6, a crossing one 7, a turning one 9 or a bifurcating one, is provided with at least one driving unit 10 that enables movement of the transporting carriage 2 inside the channel segment 5. Due to this concept each channel segment 5 is independent relative to other channel segments 5 with regard to movement of the transporting carriage 2.

Channel segments 5 may comprise more than one driving unit 10, where for crossing segments 7 or bifurcating segments this is necessary, while for straight segments and turning segments it is not necessary.

Each driving unit 10 comprises a motor 11 and a transmission gear 12. In the embodiments of the invention shown in the drawings in driving units 10 a motor 10 is used which is an electric motor and transmission gear 12 is a belt transmission, but in other embodiments a motor 11 may be used which is a pneumatic motor, combustion motor or a hydraulic motor, and a transmission gear 12 which is a toothed gear, friction gear, tension gear or shaft gear. The system of driving channels 1 may also comprise a magnetic driving unit.

As shown in Fig. 4, Fig. 5, Fig. 6, Fig. 7, Fig. 8 and Fig. 11, a driving unit 10 is located in this embodiment of the invention in side cavities of the channel segments 5 so that they do not obstruct the movement of the transporting carriage 2 inside the channel segment 5 of the driving channel 1.

It is clear that not all of the channel segments 5 may be provided with their own driving units 10 and the driving force is transmitted from a channel segment 5 provided with a driving unit 10 to a channel segment 5 without a driving unit 10, in a manner known in the art.

In this manner the transporting carriage 2 is precisely and reliably guided in the driving channel 1.

The airport apron 4 may be provided with several driving channels 1 of this kind in which a greater number of transporting carriages 2 may be moved to transport airplanes 3 from a runway to a take-off location and vice versa.

A system of driving channels 1 for a carriage 2 that transports airplanes 3 on an airport apron 4 allows for fully automatically activating and stopping the individual motors 11 and transmission gears 12 of driving units 10 in channel segments 5 of driving channels 1 for transporting airplanes 3 and monitoring this process by the ground personnel of the airport. Cooperation with the pilot of the airplane during performing this is preferable but of course it is not indispensable.

It is clear that a person skilled in the art is able, without involving inventive activity, modify and improve in different ways the system of driving channels 1 for a carriage 2 for transporting airplanes 3 on the airport apron 4 and the individual elements or assemblies thereof as presented in the nonlimiting example, without departing from the scope of the patent claims.

## Claims

1. A system of driving channels (1) for a carriage (2) that transports airplanes (3) on an airport apron (4), said carriage (2) comprising an actuator (15) with a basket (16) set thereon, for wheels (17) of an airplane (3), and being movable in channels (1) arranged into taxi routes for airplanes (3) from a landing location to a parking location and from a parking location to a take-off location, wherein said channels (1) are formed by channel segments (5), and each channel segment (5) has sidewalls and a top surface perpendicular thereto, **characterised in that** each channel segment (5) is provided with at least one driving unit (10) comprising a motor (11) and a transmission gear (12) that put in motion a carriae (2) that transports the airplane (3), and said channel segments (5) being depressed in the airport apron (4) in a manner that their upper surface is flush with the surface of the airport apron (4).

2. System of channels according to claim 1, **characterized in that** said channel segments (5) comprise straight channel segments (6).

3. System of channels according to claim 1, **characterized in that** said channel segments (5) comprise crossing channel segments (7).

4. System of channels according to claim 1, **characterized in that** said channel segments (5) comprise bifurcating channel segments (8).

5. System of channels according to claim 1, **characterized in that** said channel segments (5) comprise turning channel segments (9).

6. System of channels, **characterized in that** it defines transporting routes (taxiways) and terminal transporting routes.

7. System of channels according to claim 1, **characterized in that** said motor (11) may be an electric, pneumatic, hydraulic or combustion motor,
and said transmission gear (12) may be a friction gear, toothed gear, tension gear, chain gear, belt or band transmission, shaft gear.

8. System of channels according to claim 1, **characterized in that** said driving unit (10) comprises a magnetic drive.

9. System of channels according to claim 1, **characterized in that** said channel segments (5), along their entire length, are provided at their upper surface with pivoting plates (13) of a segmented structure, openable when necessary.

10. System of channels according to claim 9, **characterized in that** said pivoting plates (13), when closed, a slot (14) in which actuators (15), seated in said transporting carriage (2), are movable, said actuators carrying a basket (16) of said transporting carriage (2), in which the front wheel (17) of the transported airplane (3) is seated.

11. System of channels according to claim 1, **characterized in that** said channel segments (5), along their entire length, are provided at their upper surface with slidable plates (18) of a segmented structure, openable when necessary.

12. System of channels according to claim 11, **characterized in that** said slidable plates (18) form a slot (14) in which actuators (15), seated in said transporting carriage (2), are movable, said actuators carrying a basket (16) of said transporting carriage (2), in which the front wheel (17) of the transported airplane (3) is seated.

13. System of channels according to claim 1, **characterized in that** activating and stopping of the individual motors (11) and gears (12) of said driving units (10) in said channel segments (5) that transport airplanes (3) is controlled fully automatically and is monitored by the ground personnel of the airport, preferably in cooperation with the pilot of the airplane.

## Patentansprüche

1. Ein System von Antriebskanälen (1) für ein Gefährt (2), das Flugzeuge (3) auf einem Rollfeld (4) transportiert, wobei das Gefährt (2) ein Betätigungselement (15) mit einem darauf aufgesetzten Korb (16) für die Räder (17) eines Flugzeugs (3) enthält, und in den Kanälen (1), die als Rollwege für Flugzeuge (3) von dem Landeplatz zum Abstellplatz, sowie vom Abstellplatz zum Startplatz eingerichtet sind, sich bewegen kann, **wobei** die erwähnten Kanäle (1) aus Kanalsegmenten (5) gebildet sind, und jedes Kanalsegment (5) Seitenwände und eine dazu senkrechte Oberseite aufweist, **dadurch gekennzeichnet, dass** jedes Kanalsegment (5) mit mindestens einer Antriebseinheit (10), die einen Motor (11) und ein Getriebe (12) enthält, die das Gefährt (2), das das Flugzeug (3) transportiert, in Bewegung setzen, versehen ist, und die Kanalsegmente (5) so in das Rollfeld (4) eingelassen sind, dass ihre Oberseite mit der Oberfläche des Rollfeldes (4) bündig liegt.

2. Ein System von Kanälen nach Anspruch 1, **dadurch gekennzeichnet, dass** die Kanalsegmente (5) gerade Kanalsegmente (6) enthalten.

3. System von Kanälen nach Anspruch 1, **dadurch gekennzeichnet, dass** die Kanalsegmente (5) kreuzende Kanalsegmente (7) enthalten.

4. System von Kanälen nach Anspruch 1, **dadurch gekennzeichnet, dass** die Kanalsegmente (5) abzweigende Kanalsegmente (8) enthalten.

5. System von Kanälen nach Anspruch 1, **dadurch gekennzeichnet, dass** die Kanalsegmente (5) abbiegende Kanalsegmente (9) enthalten.

6. System von Kanälen, **dadurch gekennzeichnet, dass** es Transportwege (Rollwege) und Terminalwege bestimmt.

7. System von Kanälen nach Anspruch 1, **dadurch gekennzeichnet, dass** der Motor (11) ein elektrischer, pneumatischer, hydraulischer oder ein Verbrennungsmotor sein kann, und das Getriebe (12) ein Friktionsgetriebe, Zahnradgetriebe, Spannkraftgetriebe, Kettengetriebe, Gurt- oder Bandgetriebe, Wellengetriebe sein kann.

8. System von Kanälen nach Anspruch 1, **dadurch gekennzeichnet, dass** die Antriebseinheit (10) einen Magnetantrieb enthält.

9. System von Kanälen nach Anspruch 1, **dadurch gekennzeichnet, dass** die Kanalsegmente (5) entlang ihrer gesamten Länge an ihrer Oberfläche mit Schwenkplatten (13) von Segmentaufbau versehen sind, die bei Bedarf geöffnet werden können.

10. System von Kanälen nach Anspruch 9, **dadurch gekennzeichnet, dass** die Schwenkplatten (13) im geschlossenen Zustand einen Schlitz (14) bilden, in dem die im Transportgefährt (2) liegenden Betätigungselemente (15) sich bewegen können, welche Betätigungselemente einen Korb (16) des Gefährts (2), tragen, in dem das Vorderrad (17) des transportierten Flugzeugs (3) sitzt.

11. System von Kanälen nach Anspruch 1, **dadurch gekennzeichnet, dass** die Kanalsegmente (5) entlang ihrer gesamten Länge an ihrer Oberfläche mit verschiebbaren Platten (18) von Segmentaufbau versehen sind, die bei Bedarf geöffnet werden können.

12. System von Kanälen nach Anspruch 11, **dadurch gekennzeichnet, dass** die verschiebbaren Platten (18) einen Schlitz (14) bilden, in dem die im Transportgefährt (2) liegenden Betätigungselemente (15) sich bewegen können, welche Betätigungselemente einen Korb (16) des Gefährts (2) tragen, in dem das Vorderrad (17) des transportierten Flugzeugs (3) sitzt.

13. System von Kanälen nach Anspruch 1, **dadurch gekennzeichnet, dass** das Aktivieren und Anhalten der einzelnen Motoren (11) und Getriebe (12) der Antriebseinheiten (10) in den Kanalsegmenten (5), die die Flugzeuge (3) transportieren, vollständig automatisch gesteuert, und vom Bodenpersonal des Flughafens, vorzugsweise in Zusammenarbeit mit dem Piloten des Flugzeugs überwacht wird.

## Revendications

1. Système de canaux d'entraînement (1) pour un chariot (2) qui transporte des avions (3) sur une aire d'aéroport (4), ledit chariot (2) comprenant un actionneur (15) avec un panier (16) placé sur celui-ci, pour les roues (17) d'un avion (3), et étant mobile dans des canaux (1) disposés en itinéraires pour les avions (3) à partir d'un emplacement d'atterrissage à un emplacement de stationnement et d'un emplacement de stationnement à un emplacement de décollage, où lesdits canaux (1) sont formés par des segments (5) de canal, et chaque segment (5) de canal a des parois latérales et une surface supérieure perpendiculaire à celles-ci, **caractérisé en ce que** chaque segment (5) de canal est pourvu d'au moins une unité d'entraînement (10) comprenant un moteur (11) et une commande de transmission (12) qui mettent en mouvement un chariot (2) qui transporte l'avion (3), et lesdits segments (5) de canal étant enfoncés dans l'aire d'aéroport (4) de manière que leur surface supérieure affleure la surface de l'aire de d'aéroport (4).

2. Système de canaux selon la revendication 1, **caractérisé en ce que** lesdits segments (5) de canal comprennent des segments (6) de canal droits.

3. Système de canaux selon la revendication 1, **caractérisé en ce que** lesdits segments (5) de canal comprennent des segments (7) de canal croisés.

4. Système de canaux selon la revendication 1, **caractérisé en ce que** lesdits segments (5) de canal comprennent des segments (8) de canal bifurquants.

5. Système de canaux selon la revendication 1, **caractérisé en ce que** lesdits segments (5) de canal comprennent des segments (9) de canal tournants.

6. Système de canaux, **caractérisé en ce que** il définit les itinéraires de transport (voies de circulation) et les itinéraires de transport des terminaux.

7. Système de canaux selon la revendication 1, **caractérisé en ce que** ledit moteur (11) peut être un moteur électrique, pneumatique, hydraulique ou à combustion, et ladite commande de transmission (12) peut être une commande à friction, un engrenage, une commande à tension, une commande à chaîne, une transmission à courroie ou à bande ou une commande à arbre.

8. Système de canaux selon la revendication 1, **caractérisé en ce que** ladite unité d'entraînement (10) comprend un entraînement magnétique.

9. Système de canaux selon la revendication 1, **caractérisé en ce que** lesdits segments (5) de canal, sur toute leur longueur, sont pourvus à leur surface supérieure de plaques pivotantes (13) d'une structure segmentée, pouvant être ouvertes si nécessaire.

10. Système de canaux selon la revendication 9, **caractérisé en ce que** lesdites plaques pivotantes (13), lorsqu'elles sont fermées, forment une fente (14) dans laquelle des actionneurs (15), logés dans ledit chariot de transport (2), sont mobiles, lesdits actionneurs portant un panier (16) dudit chariot de transport (2), dans lequel la roue avant (17) de l'avion (3) transporté est assise.

11. Système de canaux selon la revendication 1, **caractérisé en ce que** lesdits segments (5) de canal, sur toute leur longueur, sont pourvus à leur surface supérieure de plaques coulissantes (18) d'une structure segmentée, pouvant être ouvertes si nécessaire.

12. Système de canaux selon la revendication 11, **caractérisé en ce que** lesdites plaques coulissantes (18) forment une fente (14) dans laquelle des actionneurs (15), logés dans ledit chariot de transport (2), sont mobiles, lesdits actionneurs portant un panier (16) dudit chariot de transport (2), dans lequel la roue avant (17) de l'avion (3) transporté est assise.

13. Système de canaux selon la revendication 1, **caractérisé en ce que** l'activation et l'arrêt des moteurs (11) individuels et des commandes (12) desdites unités d'entraînement (10) dans lesdits segments (5) de canal qui transportent des avions (3) sont commandés de manière entièrement automatique et sont surveillés par le personnel au sol de l'aéroport, de préférence en coopération avec le pilote de l'avion.
